# EUROPÄISCHE PATENTSCHRIFT

(11) **EP 4 058 680 B1**
(45) Veröffentlichungstag und Bekanntmachung des Hinweises auf die Patenterteilung: **08.11.2023**
(21) Anmeldenummer: 20774872.4
(22) Anmeldetag: 02.09.2020
(51) Int. Cl.: F16C 33/58, F16C 33/78, F16C 43/04, F16C 33/66, F16C 33/76

(54) **RADLAGEREINHEIT**
WHEEL BEARING UNIT
UNITÉ DE ROULEMENT DE ROUE

(30) Priorität: 11.11.2019 DE 102019130275
(43) Veröffentlichungstag der Anmeldung: 21.09.2022
(73) Patentinhaber: Schaeffler Technologies AG & Co. KG, 91074 Herzogenaurach (DE)
(72) Erfinder: SCHRAUT, Lukas, 97440 Werneck (DE); BARTHEL, Bernd, 97508 Grettstadt (DE); KATANA, Branko, 97456 Dittelbrunn (DE)
(86) Internationale Anmeldenummer: PCT/DE2020/100768
(87) Internationale Veröffentlichungsnummer: WO 2021/093914

(56) Entgegenhaltungen:
- DE-A1- 10 123 677
- JP-A- 2001 099 172
- JP-A- 2010 025 216
- JP-A- 2011 148 409
- US-A- 5 118 206

## Beschreibung

### Gebiet der Erfindung

Die Erfindung bezieht sich auf eine Radlagereinheit, insbesondere für Kraftfahrzeuge.

### Hintergrund der Erfindung

Radlagereinheiten mit vormontiert einpressbaren Wälzlagereinheiten, beispielsweise für Nutzfahrzeuge, kommen dann zum Einsatz, wenn eine ordnungsgemäße Installation eines Radlagers, welches in der Regel mindestens aus zwei Radlagereinheiten besteht, nicht in einer Kfz-Werkstatt möglich ist.

Für eine Installation eines Radlagers sind eine saubere Umgebung und zahlreiche Vorsichtsmaßnahmen bei der ordnungsgemäßen Installation unabkömmlich. Leider kann diesen Maßnahmen bei bestimmten Bedingungen nicht nachgekommen werden. Durch Verschmutzung des Wälzraumes büßt man in der Regel Lebensdauer des Radlagers ein. Bei anderen Arten von Lagern gerade im Bereich Automotive, ergibt sich die gleiche Problematik.

Denkbar ist der Einsatz von austauschbaren Radlagereinheiten, deren Wälzraum während der Installation nicht geöffnet werden muss und damit keine Verschmutzung des Wälzraumes riskiert wird. Allerdings ist hierbei der Materialaufwand relativ hoch, womit das Radlager teuer wird.

Deshalb hat man in der Vergangenheit so genannte Insert-Radlagereinheiten, insbesondere Insert- Kegelrollenlagereinheiten, entwickelt, die in einem vorinstallierten Zustand ausgeliefert und transportiert werden können ohne den Wälzraum unnötigerweise bei der Installation oder anderweitig offen zu legen. Die Insert-Radlagereinheiten werden im vormontierten Zustand seitlich in den Radträger, beziehungsweise in oder auf die Radnabe gepresst.

Derartige Kegelrollenlager weisen axial und radial wirkende Dichtmittel auf, wobei das radial wirkende Dichtmittel einen Spalt zwischen zwei mit ihren Stirnseiten aneinander liegenden Innenringen abdichtet. Der Dichtring ist in mehreren Ausführungsbeispielen stets an der radialen Innenseite der beiden Innenringe in einer gemeinsamen Ringnut angeordnet, welche durch Einsenkungen im Bereich der zueinander weisenden Stirnseiten der beiden Innenringe ausgebildet ist. Die durch diese Einsenkungen gebildete gemeinsame Ringnut zur Aufnahme des Dichtrings hat dabei jeweils eine rechteckige Querschnittsgeometrie.

Zur Erzielung von gewünschten Dichteigenschaften, welche auch einen Druckausgleich zwischen dem Innenraum des Lager und der Umgebung zulassen sollen bzw. eine Belüftung desselben ermöglicht, umfasst der in Varianten unterschiedlich ausgebildete Dichtring jeweils ein metallisches Spannelement, welches eine radiale Anpresskraft auf den Dichtring in Richtung zu den die Ringnut bildenden Innenringen ausübt und diesen in der Ringnut sichert sowie einen Druckausgleich gestattet. Insofern handelt es sich bei den bekannten Dichtringen durchweg um vergleichsweise teuere Gummi-Metall-Bauteile, die aufgrund ihres dortigen Aufbaus eine hermetische Abdichtung des Innenraumes des Wälzlagers nicht ermöglichen.

Aus der WO 97/42425 A1 ist außerdem ein zweireihiges Kegelrollenlager bekannt, welches als Radlager in einer Radnabe eines Fahrzeuges eingebaut ist. Der zweiteilige Innenring dieses Kegelrollenlagers ist gegen ein Eindringen von unerwünschten Stoffen, wie beispielsweise von Öl aus dem Bereich einer Fahrzeugachse, mittels eines Dichtsystems geschützt, welches die aneinander liegenden Stirnseiten der beiden Innenringe überdeckt und im Lagerinnenraum angeordnet ist. Dieses Dichtsystem besteht aus zwei O-Ringen, von denen jeweils ein O-Ring in einer zugeordneten Ringnut am Außenumfang der jeweiligen Innenringe ausgebildet ist. Die beiden O-Ringe sind zudem von einem metallischen Ring radial umgriffen, welcher dieselben dichtend gegen die zugeordneten Innenringe drückt. Einen damit vergleichbaren Aufbau zeigt ein vierreihiges Wälzlager, welches aus der DE 39 15 624 A1 bekannt ist, jedoch werden dort keine O-Ringe sondern anders gestaltete Dichtmittel verwendet, welche in eine im Querschnitt rechtwinklige gemeinsame Ringnut an den Innenringen eingesetzt und durch einen Blechring gehalten sind.

Schließlich ist aus der DE 36 21 381 A1 ein zweireihiges Wälzlager bekannt, welches mehrteilige Innenringe und Außenringe aufweist. Bei diesem Wälzlager sind die Außenringe mittels eines Distanzringes axial zueinander beabstandet, während die Innenringe mittels eines im Querschnitt U-förmigen Befestigungsringes verbunden sind, deren Schenkel in jeweils zugeordnete Umfangsnuten in den Innenringen eingreifen.

JP 2011 148 409 A zeigt eine Radlagereinheit mit Haltering aus Metallblech gemäß dem Oberbegriff des Anspruchs 1.

Die bisher bekannten Wälzlager mit zwei stirnseitig eng aneinander liegenden Innenringen weisen nur eine ungenügende Abdichtung des Aufnahmeraumes für dessen Wälzkörper auf, so dass ungewollt Schmierstoff aus dem Wälzlager austreten kann oder Fremdstoffe eintreten können. In beiden Fällen ist mit einer Verschlechterung der Eigenschaften und einer Verkürzung der Lagerlebensdauer des Wälzlagers zu rechnen. Bemängelt wird bei einigen Ausführungsformen beispielsweise eine unzureichende axiale Verspannung der beiden Innenringe gegeneinander, so dass im Bereich derer Trennfuge zwischen deren Stirnseiten Fremdstoffe die dort angeordnete Dichtung überwinden können. Sofern bei anderen Ausführungsformen die Dichtung mittels eines gesonderten Blechringes oder durch einen in deren Gummimaterial eingearbeiteten Blechring mit einer für Dichtzwecke ausreichenden Wirkung gegen die Innenringe pressbar ist, so werden diese Dichtringe als vergleichsweise teuer in der Herstellung beurteilt.

### Zusammenfassung der Erfindung

Der Erfindung liegt die Aufgabe zugrunde, eine Radlagereinheit zur Verfügung zu stellen, welche sicher gegen äußerer Einflüsse abdichtet.

Erfindungsgemäß wird diese Aufgabe gelöst durch eine Radlagereinheit mit mindestens einem Außenring und zumindest zwei Innenringen, zwischen denen in einem Käfig geführte Wälzkörper angeordnet sind, wobei zwei benachbarte Innenringe mit ihren zueinander weisenden axialen Stirnseiten aneinander liegen, und wobei eine Abdichtvorrichtung zur Abdichtung einer Schnittstelle der beiden Innenringe vorgesehen ist, wobei die Abdichtvorrichtung durch ein ringförmiges Halteelement ausgebildet ist und wobei an dem Halteelement mindestens ein Dichtelement vorgesehen ist, das Dichtelement als Dichtring ausgebildet ist, welcher mindestens zwei Kontaktpunkte aufweist, die das Halteelement kontaktieren und mindestens jeweils einen Kontaktpunkt, welcher jeweils einen Innenring kontaktiert, wobei mindestens einer der Kontaktpunkte derart ausgebildet ist, dass dieser eine plane Fläche aufweist.

Der Erfindung liegt die Erkenntnis zu Grunde, dass die aus dem Stand der Technik bekannten Mitteldichtungen axial verspannt werden und somit axial abdichten. Jedoch kommt es bei ungenügender axialer Verspannung der Radlagereinheit dazu, dass die Mitteldichtung unzureichend axial verspannt sind und somit nicht richtig abdichten.

Erfindungsgemäß ist in dem Halteelement der Abdichtvorrichtung ein Dichtelement vorgesehen, dass derart ausgebildet ist, dass dieses mindestens zwei radiale Kontaktpunkte aufweist, die das Halteelement kontaktieren und mindestens jeweils einen radialen Kontaktpunkt, welcher jeweils einen Innenring kontaktiert und mindestens einer der Kontaktpunkte derart ausgebildet ist, dass dieser eine plane Fläche aufweist. Durch diese plane Fläche werden die Adhäsionskräfte, welcher im Bereich der Abdichtvorrichtung entstehen, verstärkt, wodurch die Dichtleistung erhöht werden kann. Bei aus dem Stand der Technik bekannten spitzzulaufenden Flächen ist immer ein weiteres Medium notwendig, welches den benötigten Druck auf die Dichtung ausübt. Ein weiterer Vorteil der erfindungsgemäßen Ausführungsform liegt darin, dass die Kontaktpunkte und deren Kontaktzonen über die Lebensdauer hinweg unverändert bleiben. Des weiteren wird durch die plane Fläche verhindert, dass Dichtelemente über die Gebrauchsdauer hinweg umklappen können. Demnach ist gemäß der Erfindung eine hermetisch abdichtende und selbstsichernde Abdichtvorrichtung geschaffen, die sicher und mit wenig Aufwand ein Eindringen von Fremdstoffen und/ oder ein Abwandern von Schmierstoff über die aneinander liegenden Stirnseiten der Innenringe in oder aus denjenigen Raum der Radlagereinheit verhindert, in dem die Wälzkörper angeordnet sind.

Gemäß einer Ausgestaltung der Erfindung weist das Dichtlement mindestens eine Einführschräge auf und wobei die Einführschräge aus einem erste neinen Winkel und einem zweiten Winkel ausgebildet ist. Die Größe des Winkels hängt grundsätzlich von den Einführschrägen der Umgebungsbauteile ab. Vorteilhafterweise weist der erste Winkel mindestens 15° auf. Der zweite Winkel ist etwas steiler ausgebildet und weist mindestens 20° auf. Mittels der Einführschrägen ist ein einfaches Aufschieben des Dichtelementes auf den Innenring möglich.

Bevorzugterweise, weist das Dichtelement eine Mindestkonturdicke in Abhängigkeit der Materialhärte auf. Dass die Dichtwirkung nicht darunter leidet, muss die Mindestkonturdicke derart gewählt werden, welche in Kombination mit ausgewählter Materialhärte ausreichend große Anpresskräfte der Dichtlippen auf die Umgebungsbauteile ausübt, um eine ausreichende Dichtwirkung zu garantieren. Die Mindestkonturdicke ist auch so gewählt, dass bei anstehenden Medien und ggf. chemischer Oberflächenbeanspruchung, sowie Temperaturbeanspruchung des Dichtelementmaterials, die Grunddichtfunktion durch ausreichend unbeeinträchtigten Kernmaterials weiterhin gegeben ist. So kann beispielsweise ein Verhältnis der Mindestkonturdicke zur minimalen Höhe des Dichtelementes bei 85 Shore A: Min 6:1 oder bei 70 Shore A: Min 8:1 liegen.

Gemäß einer Ausgestaltung der Erfindung ist die Abdichtvorrichtung in einer gemeinsamen Ringnut der Innenringe angeordnet, welche durch Einsenkungen im Bereich der zueinander weisenden Stirnseiten der Innenringe gebildet ist. Durch das Vorsehen der Abdichtvorrichtung kann eine ausreichende radiale Verspannung des Dichtelementes ermöglicht werden. Zudem werden durch die Einsenkungen Kanten am jeweiligen Innenring ausgebildet, welche gleichzeitig zur Ausrichtung, Zentrierung und Positionierung der Abdichtvorrichtung dienen.

Erfindungsgemäß ist das Haltelemente U-förmig ausgebildet und weist zwei Seitenringe auf, die mittels eines Umlaufenden Steges verbunden sind. Hierdurch wird ein sicherer Halt des Dichtelementes in dem Haltelement während der Montage und des Betriebs der Radlagereinheit gewährleistet. Zudem können hierdurch axiale Verschiebungen des Dichtelementes verhindert werden.

Bevorzugterweise bildet mindestens einer der Seitenringe eine Positionierhilfe aus, welche an einer Kante der Ringnut zentriert und positioniert wird.

Erfindungsgemäß weist mindestens einer der Seitenringe mindestens eine Unterbrechung auf. Vorteilhafterweise sind mehrere Unterbrechungen gleichmäßig über den Umfang verteilt an beiden Seitenringen vorgesehen. Hierdurch wir eine kostengünstige Entformung bei der Herstellung des Halteelementes ermöglicht. Zudem erleichtert diese Ausbildung des Haltelementes die Montage des Dichtelementes, sowie die Endmontage an der Radlagereinheit.

Gemäß einer Ausgestaltung der Erfindung besteht der Dichtring aus einem gummielastischen Material. Damit kann ein besonders gutes Einschmiegen des Dichtelementes in das Halteelement erreicht werden.

Erfindungsgemäß besteht das Halteelement aus einem Kunststoff. Bevorzugterweise sind die Wälzkörper als Kegelrollen ausgebildet. Es kann sich bei den Wälzkörpern jedoch auch um Nadelrollen, Zylinderrollen, Tonnenrollen oder Kugelrollen, die für schwere Nutzfahrzeuge, beziehungsweise für eine hohe Lastübertragung geeignet sind. Alternativ sind auch kugelförmige Wälzkörper denkbar.

### Kurze Beschreibung der Zeichnung

Nachfolgend werden zwei Ausführungsbeispiele der Erfindung anhand von drei Figuren dargestellt. Es zeigen:
- Fig. 1: einen Längsschnitt durch eine erfindungsgemäße Radlagereinheit,
- Fig.2: einen Längsschnitt durch eine Abdichtvorrichtung der erfindungsgemäßen Radlagereinheit,
- Fig.3: einen Längsschnitt durch eine Abdichtvorrichtung der erfindungsgemäßen Radlagereinheit,
- Fig. 4: eine Vergrößerte Ansicht der Abdichtvorrichtung aus Figur 3,
- Fig. 5: einen Längsschnitt durch eine Abdichtvorrichtung der erfindungsgemäßen Radlagereinheit,
- Fig. 6a: Darstellung der Positionsänderung der Abdichtvorrichtung der erfindungsgemäßen Radlagereinheit,
- Fig. 6b: Darstellung der Positionsänderung der Abdichtvorrichtung einer aus dem Stand der Technik bekannten Radlagereinheit,
- Fig. 7: eine perspektivische Ansicht der Abdichtvorrichtung der erfindungsgemäßen Radlagereinheit.

### Detaillierte Beschreibung der Zeichnungen

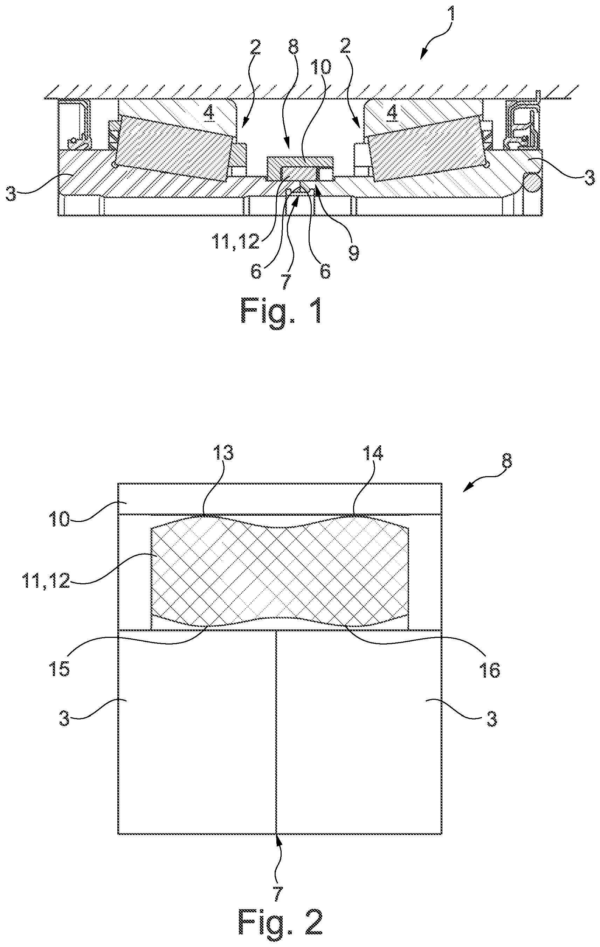

Figur 1 zeigt einen Längsschnitt durch eine der erfindungsgemäßen Radlagereinheit 1. Die Radlagereinheit ist als zweireihiges Kegelrollenlager 2 ausgeführt. Das Kegelrollenlager 2 weist einen Innenring 3 sowie einen Außenring 4 auf. Zwischen durch den Innenring 3 und den Außenring 4 ausgebildeten Laufflächen sind Kegelrollen 5 angeordnet, welche an den Laufflächen abwälzen.

Jeweils eine Stirnseite 6 der beiden Innenringe 3 liegen aneinander an und bilden hierdurch eine Schnittstelle 7 aus. Zur Abdichtung dieser Schnittstelle 7 ist eine Abdichtvorrichtung 8 vorgesehen. Wie aus Figur 1 zu erkennen ist, bilden die beiden Innenringe 3 eine Ringnut 9 aus. Diese wird durch entsprechende Einsenkungen in den beiden Innenringen 3 ausgebildet.

Die Abdichtvorrichtung 8 ist durch ein ringförmiges Halteelement 10 ausgebildet, an dem mindestens ein Dichtelement 11 vorgesehen ist. Das Dichtelement ist als Dichtring 12 ausgebildet. Der Dichtring 12 besteht dabei aus einem gummielastischen Material. Zur näheren Erläuterung des Dichtelementes 11 wird nun Bezug auf die Figuren 2, 3 und 4 genommen. Der Dichtring 12 weist dabei zwei Kontaktpunkte 13, 14 auf, welche das Halteelement 10 kontaktieren und jeweils einen Kontaktpunkt 15, 16, welcher jeweils einen Innenring 3 kontaktiert. Mittels dieser speziellen Ausbildung wird der Dichtring 12 bei Verbau radial an die Innenringe 3 angepresst und dementsprechend radial verspannt. Dies hat den Vorteil, dass auch bei einer axialen Verschiebung der Innenringe 3, die radiale Abdichtung bzw. das radiale Verspannen des Dichtelementes 11 unberührt bleibt.

Mindestens einer der Kontaktpunkte 13, 14, 15, 16 ist derart ausgebildet, dass dieser eine plane Fläche X aufweist. Durch diese plane Fläche werden die Adhäsionskräfte, welcher im Bereich der Abdichtvorrichtung 8 entstehen, verstärkt, wodurch die Dichtleistung erhöht werden kann. Bei aus dem Stand der Technik bekannten spitzzulaufenden Flächen des Dichtelementes 11 ist immer ein weiteres Medium notwendig, welches den benötigten Druck auf die Dichtung ausübt. Ein weiterer Vorteil der erfindungsgemäßen Ausführungsform liegt darin, dass die Kontaktpunkte 13, 145, 15, 16 und deren Kontaktzonen über die Lebensdauer hinweg unverändert bleiben. Des weiteren wird durch die plane Fläche verhindert, dass Dichtelemente 11 über die Gebrauchsdauer hinweg umklappen können

Das Dichtelement 11 weist mindestens eine Einführschräge auf und wobei die Einführschräge aus einem ersten Winkel a und einem zweiten Winkel b ausgebildet ist. Die Größe des Winkels a, b hängt grundsätzlich von den Einführschrägen der Umgebungsbauteile ab. Vorteilhafterweise weist der erste Winkel a mindestens 15° auf. Der zweite Winkel b ist etwas steiler ausgebildet und weist mindestens 20° auf. Mittels der Einführschrägen ist ein einfaches Aufschieben des Dichtelementes 11 auf den Innenring 3 möglich.

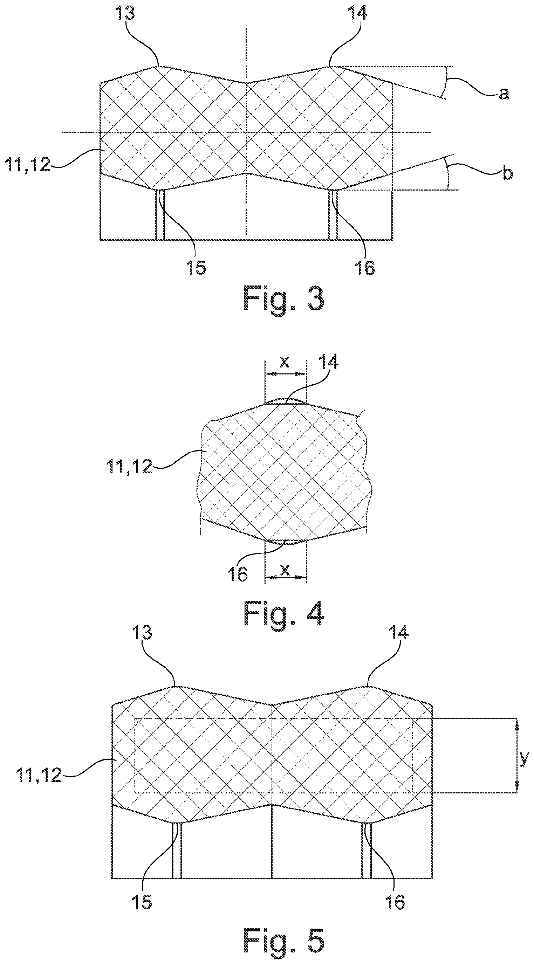

Wie weiterhin aus Figur 5 ersichtlich ist, weist das Dichtelement 11 eine Mindestkonturdicke y auf. Die Mindestkonturdicke ist dabei abhängig von einer Materialhärte. Dass die Dichtwirkung nicht darunter leidet, muss die Mindestkonturdicke y derart gewählt werden, welche in Kombination mit ausgewählter Materialhärte ausreichend große Anpresskräfte des Dichtelementes 11 auf die Umgebungsbauteile ausübt, um eine ausreichende Dichtwirkung zu garantieren. Die Mindestkonturdicke ist auch so gewählt, dass bei anstehenden Medien und ggf. chemischer Oberflächenbeanspruchung, sowie Temperaturbeanspruchung des Dichtelementmaterials, die Grunddichtfunktion durch ausreichend unbeeinträchtigten Kernmaterials weiterhin gegeben ist.

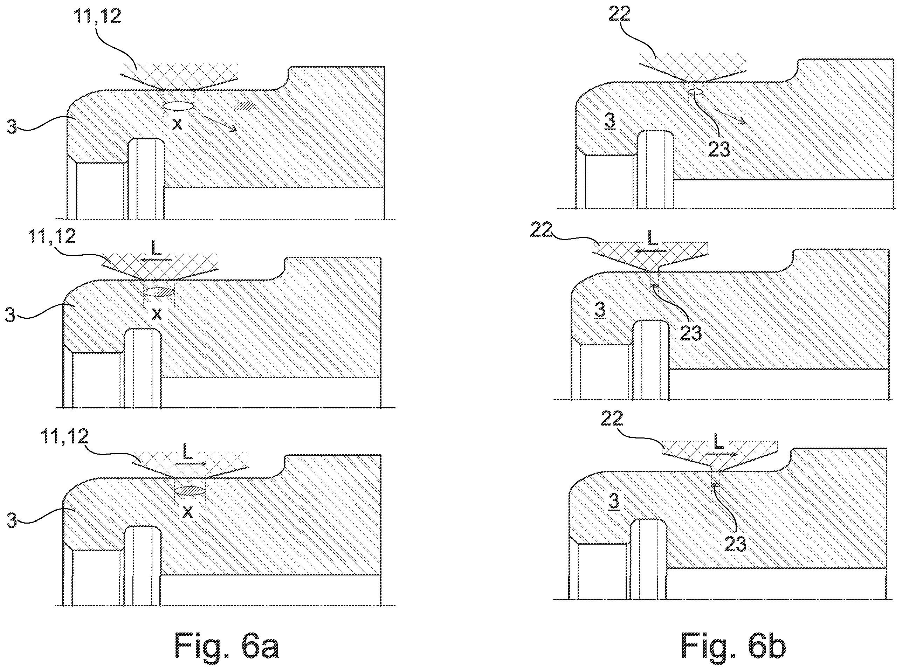

Die Figuren 6a und 6b stellen eine Positionsänderung der Abdichtvorrichtung der erfindungsgemäßen Radlagereinheit als auch einer aus dem Stand der Technik bekannten Radlagereinheit dar. Figur 6a zeigt dabei die erfindungsgemäße Ausführungsform und Figur 6b verwendet ein Dichtelement 22 aus dem Stand der Technik. Wie aus Figur 6a ersichtlich ist, ist die Dichtwirkung des Dichtelementes 11 unabhängig von einer Positionsänderung des Dichtlementes 11 während einer Axialbewegung L der Dichtung selbst oder des Innenrings 3. Die Kontaktpunkte 13, 14, 15, 16 sind dabei immer als plane Fläche X ausgebildet und bleiben bei jeglicher Bewegung gleich. Im Gegensatz hierzu ist aus Figur 6b ersichtlich, dass sich bei einer Axialbewegung L des Dichtelementes 22 die Kontaktpunkte 23 beeinflusst werden. Die spitzzulaufenden Kontaktpunkte 23 klappen während der Axialbewegung L um und die Kontaktpunkte sind somit nach einer Positionsänderung minimiert.

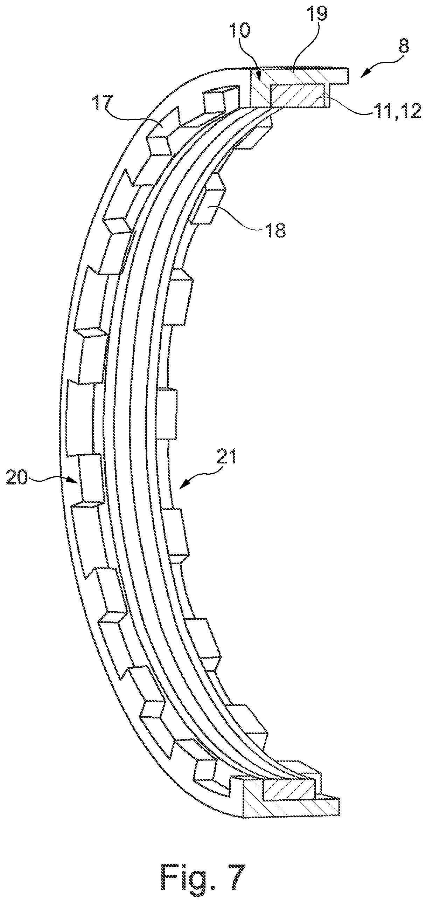

Figur 7 zeigt eine Ausbildung der Abdichtvorrichtung 8. Das Haltelemente 10 ist dabei U-förmig ausgebildet und weist zwei Seitenringe 17, 18 auf, die mittels eines Umlaufenden Steges 19 verbunden sind. Hierdurch wird ein sicherer Halt des Dichtelementes 11 in dem Haltelement 8 gewährleistet.

Wie des Weiteren zu erkennen ist, sind die Seitenringe derart ausgebildetm dass diese mehrere Unterbrechungen 20, 21 über den Umfang verteilt aufweisen. Die Seitenringe 17, 18 bilden gleichzeitig eine Positionierhilfe aus, welche an einer Kante der Ringnut 9 zentriert und positioniert wird.

### Bezugszeichenliste

- 1: Radlagereinheit
- 2: Kegelrollenlager
- 3: Innenring
- 4: Außenring
- 5: Kegelrollen
- 6: Stirnseite
- 7: Schnittstelle
- 8: Abdichtvorrichtung
- 9: Ringnut
- 10: Halteelement
- 11: Dichtelement
- 12: Dichtring
- 13: Kontaktpunkt
- 14: Kontaktpunkt
- 15: Kontaktpunkt
- 16: Kontaktpunkt
- 17: Seitenringe
- 18: Seitenringe
- 19: Steg
- 20: Unterbrechung
- 21: Unterbrechung
- 22: Dichtelement Stand der Technik
- 23: Kontaktpunkte

- X: plane Fläche
- a: erster Winkel
- b: zweiter Winkel
- y: Mindestkonturdicke
- L: Axialbewegung

## Patentansprüche

1. Radlagereinheit mit mindestens einem Außenring (4) und zumindest zwei Innenringen (3), zwischen denen in einem Käfig geführte Wälzkörper angeordnet sind, wobei zwei benachbarte Innenringe (3) mit ihren zueinander weisenden axialen Stirnseiten (6) aneinander liegen, und wobei eine Abdichtvorrichtung (8) zur Abdichtung einer Schnittstelle der beiden Innenringe (3) vorgesehen ist, wobei die Abdichtvorrichtung (8) durch ein ringförmiges Halteelement (10) ausgebildet ist und wobei an dem Halteelement (10) mindestens ein Dichtelement (11) vorgesehen ist, das Dichtelement (11) als Dichtring (12) ausgebildet ist, welcher mindestens zwei Kontaktpunkte (13, 14) aufweist, die das Halteelement (10) kontaktieren und mindestens jeweils einen Kontaktpunkt (15, 16), welcher jeweils einen Innenring (3) kontaktiert, wobei mindestens einer der Kontaktpunkte (13, 14, 15, 16) derart ausgebildet ist, dass dieser eine plane Fläche (X) aufweist, wobei das Halteelement (10) u-förmig ausgebildet ist und zwei Seitenringe (17, 18) aufweist, die mittels eines umlaufenden Steges (19) verbunden sind, wobei mindestens einer der Seitenringe (17, 18) mindestens eine Unterbrechung (20 ,21) aufweist,
**dadurch gekennzeichnet, dass** das Halteelement (10) aus einem Kunststoff besteht.

2. Radlagereinheit nach Anspruch 1, wobei das Dichtelement (11) mindestens eine Einführschräge aufweist und wobei die Einführschräge aus einem ersten Winkel (a) und einem zweiten Winkel (b) ausgebildet ist.

3. Radlagereinheit nach einem der vorhergehenden Ansprüche, wobei das Dichtelement (11) eine Mindestkonturdicke (y) in Abhängigkeit der Materialhärte aufweist

4. Radlagereinheit nach einem der vorhergehenden Ansprüche, wobei die Abdichtvorrichtung (8) in einer gemeinsamen Ringnut (9) der Innenringe (3) angeordnet ist, welche durch Einsenkungen im Bereich der zueinander weisenden Stirnseiten (6) der Innenringe (3) gebildet ist.

5. Radlagereinheit nach Anspruch 4, wobei mindestens einer der Seitenringe (17, 18) eine Positionierhilfe ausbildet, welche an einer Kante der Ringnut (9) zentriert und positioniert wird.

6. Radlagereinheit nach einem der vorhergehenden Ansprüche, wobei der Dichtring (12) aus einem gummielastischen Material besteht.

## Claims

1. A wheel bearing unit having at least one outer ring (4) and at least two inner rings (3), between which rolling elements guided in a cage are arranged, wherein two adjacent inner rings (3) bear against each other by their mutually facing axial end faces (6), and wherein a sealing device (8) is provided to seal an interface of the two inner rings (3), wherein the sealing device (8) is formed by an annular retaining element (10), and wherein at least one sealing element (11) is provided on the retaining element (10), the sealing element (11) being in the form of a sealing ring (12) which has at least two contact points (13, 14) which are in contact with the retaining element (10) and at least one contact point (15, 16) which is in contact with one inner ring (3) in each case, wherein at least one of the contact points (13, 14, 15,16) is designed such that it has a flat face (X), wherein the retaining element (10) is U-shaped and has two side rings (17, 18), which are connected by means of a circumferential land (19), wherein at least one of the side rings (17, 18) has at least one recess (20, 21), **characterised in that** the retaining element (10) is made of a plastic material.

2. The wheel bearing unit according to claim 1, wherein the sealing element (11) has at least one insertion bevel and wherein the insertion bevel is formed by a first angle (a) and a second angle (b).

3. The wheel bearing unit according to any one of the preceding claims, wherein the sealing element (11) has a minimum contour thickness (y) depending on the material hardness.

4. The wheel bearing unit according to any one of the preceding claims, wherein the sealing device (8) is arranged in a common annular groove (9) of the inner ring (3), which is formed by depressions in the region of the mutually facing end faces (6) of the inner ring (3).

5. The wheel bearing unit according to claim 4, wherein at least one of the side rings (17, 18) forms a positioning aid, which is centred and positioned on an edge of the annular groove (9).

6. The wheel bearing unit according to any one of the preceding claims, wherein the sealing ring (12) is made of a rubber-elastic material.

## Revendications

1. Unité de roulement de roue comportant au moins une bague externe (4) et au moins deux bagues internes (3), entre lesquelles des éléments roulants guidés dans une cage sont agencés, dans laquelle deux bagues internes (3) voisines reposent l'une sur l'autre avec leurs côtés frontaux (6) tournés l'un vers l'autre et dans laquelle un dispositif d'étanchéité (8) destiné à assurer l'étanchéité d'une interface des deux bagues internes (3) est prévu, le dispositif d'étanchéité (8) étant formé par un élément de retenue annulaire (10) et au moins un élément de joint (11) étant prévu sur l'élément de retenue (10), l'élément de joint (11) étant formé comme une bague d'étanchéité (12), qui présente au moins deux points de contact (13, 14), qui entrent en contact avec l'élément de retenue (10) et au moins chacun un point de contact (15, 16), qui entre en contact chacun avec une bague interne (3), au moins un des points de contact (13, 14, 15, 16) étant conçu pour présenter une surface plane (X), l'élément de retenue (10) étant conçu en forme de u et présentant deux bagues latérales (17, 18), qui sont reliées au moyen d'une entretoise périphérique (19), au moins une des bagues latérales (17, 18) présentant au moins une interruption (20, 21), **caractérisée en ce que** l'élément de retenue (10) est constitué d'un plastique.

2. Unité de roulement de roue selon la revendication 1, dans laquelle l'élément de joint (11) présente au moins un chanfrein d'introduction et dans laquelle le chanfrein d'introduction est formé d'un premier angle (a) et d'un second angle (b).

3. Unité de roulement de roue selon l'une des revendications précédentes, dans laquelle l'élément de joint (11) présente une épaisseur de contour minimale (y) en fonction de la dureté du matériau

4. Unité de roulement de roue selon l'une des revendications précédentes, dans laquelle le dispositif d'étanchéité (8) est agencé dans une rainure annulaire (9) des bagues internes (3), qui est formée par des enfoncements dans la zone des côtés frontaux (6) des bagues internes (3) tournés l'un vers l'autre.

5. Unité de roulement de roue selon la revendication 4, dans laquelle au moins une des bagues latérales (17, 18) forme une aide au positionnement, qui est centrée et positionnée sur un bord de la rainure annulaire (9).

6. Unité de roulement de roue selon l'une des revendications précédentes, dans laquelle la bague d'étanchéité (12) est constituée d'un matériau caoutchouc élastique.
